(19) **Europäisches Patentamt / European Patent Office / Office européen des brevets**

(11) **EP 4 135 091 A1**

(12) **EUROPEAN PATENT APPLICATION**
published in accordance with Art. 153(4) EPC

(43) Date of publication:
**15.02.2023 Bulletin 2023/07**

(21) Application number: **21785430.6**

(22) Date of filing: **07.04.2021**

(51) International Patent Classification (IPC):
**H01M 10/058** (2010.01)     **H01M 4/38** (1974.07)
**H01M 4/46** (1974.07)      **H01M 10/052** (2010.01)

(52) Cooperative Patent Classification (CPC):
**H01M 4/38; H01M 4/46; H01M 10/052;
H01M 10/058;** Y02E 60/10; Y02P 70/50

(86) International application number:
**PCT/JP2021/014757**

(87) International publication number:
**WO 2021/206121 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2020 JP 2020070384**

(71) Applicant: **SUMITOMO CHEMICAL COMPANY,
LIMITED
Tokyo 103-6020 (JP)**

(72) Inventors:
• **MATSUMOTO Shingo
Tsukuba-shi, Ibaraki 300-3294 (JP)**
• **YAMAGUCHI Takitaro
Tsukuba-shi, Ibaraki 300-3294 (JP)**

(74) Representative: **Vossius & Partner
Patentanwälte Rechtsanwälte mbB
Siebertstraße 3
81675 München (DE)**

(54) **METHOD FOR MANUFACTURING LITHIUM SECONDARY BATTERY AND METHOD FOR CHARGING LITHIUM SECONDARY BATTERY**

(57)     Provided is a method of manufacturing a lithium secondary battery including an aluminum anode configured to occlude and release lithium ions, a cathode configured to occlude and release lithium ions, and an electrolyte, the aluminum anode being formed of an aluminum-containing metal, the method including: a step of assembling the lithium secondary battery; a step of charging the assembled lithium secondary battery; a step of storing the lithium secondary battery for at least 4 hours after the charging; and a step of inspecting a capacity of the lithium secondary battery after the step of storing.

EP 4 135 091 A1

**Description**

[Technical Field]

The present invention relates to a method of manufacturing a lithium secondary battery and a method of charging a lithium secondary battery.

Priority is claimed on Japanese Patent Application No. 2020-070384, filed April 9, 2020, the content of which is incorporated herein by reference.

[Background Art]

Rechargeable lithium secondary batteries have been already in practical use not only for small power sources in mobile phone applications, notebook personal computer applications, and the like but also for medium-sized and large-sized power sources in automotive applications, power storage applications, and the like.

As for an anode included in a lithium secondary battery, studies are being conducted to improve battery performance by using a material having a theoretical capacity higher than that of graphite, which is an anode material in the related art. As such a material, as with graphite, for example, a metal material capable of occluding and releasing lithium ions has attracted attention.

As an example of an anode formed of the metal material, for example, Patent Document 1 describes an anode which is a porous aluminum alloy and is formed of an anode active material for a secondary battery containing at least one kind of silicon or tin.

[Citation List]

[Patent Document]

[Patent Document 1]
Japanese Unexamined Patent Application, First Publication No. 2011-228058

[Summary of Invention]

[Technical Problem]

While the application fields of lithium secondary batteries expand, lithium secondary batteries are used not only as single batteries but also as assembled batteries for the purpose of increasing capacity or voltage. An assembled battery is a battery in which single batteries are combined in series or in parallel. There are cases where a single battery is referred to as a "cell". In a case of assuming use as an assembled battery, it is necessary to suppress variations in cell capacity.

The present invention has been made in view of the above circumstances, and an object of the present invention is to provide a method of manufacturing a lithium secondary battery having small variations in capacity and a method of charging a lithium secondary battery.

[Solution to Problem]

The present invention includes the following [1] to [6].

[1] A method of manufacturing a lithium secondary battery including an aluminum anode configured to occlude and release lithium ions, a cathode configured to occlude and release lithium ions, and an electrolyte, the aluminum anode being formed of an aluminum-containing metal, the method including: a step of assembling the lithium secondary battery; a step of charging the assembled lithium secondary battery; a step of storing the lithium secondary battery for at least 4 hours after the charging; and a step of inspecting a capacity of the lithium secondary battery after the step of storing.

[2] method of manufacturing a lithium secondary battery according to [1], in which the step of charging is a step of charging the lithium secondary battery to 10% or more of a full charge capacity of the assembled lithium secondary battery.

[3] The method of manufacturing a lithium secondary battery according to [1] or [2], in which the aluminum-containing metal is a metal in which a non-aluminum metal phase is dispersed in an aluminum metal phase.

[4] The method of manufacturing a lithium secondary battery according to any one of [1] to [3], in which the aluminum-containing metal has an average corrosion rate of 0.2 mm/year or less measured by an immersion test under the following immersion conditions,

[immersion conditions]
immersion solution: 3.5% NaCl aqueous solution adjusted to a pH of 3 using acetic acid as a pH adjuster,
immersion temperature: 30°C,
immersion time: 72 hours.

[5] The method of manufacturing a lithium secondary battery according to any one of [1] to [4], in which the aluminum-containing metal has a Vickers hardness of 10 Hv or more and 70 Hv or less.
[6] A method of charging a lithium secondary battery including an aluminum anode configured to occlude and release lithium ions, a cathode configured to occlude and release lithium ions, and an electrolyte, the aluminum anode being formed of an aluminum-containing metal, the method including: charging the lithium secondary battery after assembling the lithium secondary battery; storing the lithium secondary battery for at least 4 hours after the charging; and inspecting a capacity of the lithium secondary battery after the storing.

[Advantageous Effects of Invention]

According to the present invention, it is possible to provide a method of manufacturing a lithium secondary battery having small variations in capacity and a method of charging a lithium secondary battery.

[Brief Description of Drawings]

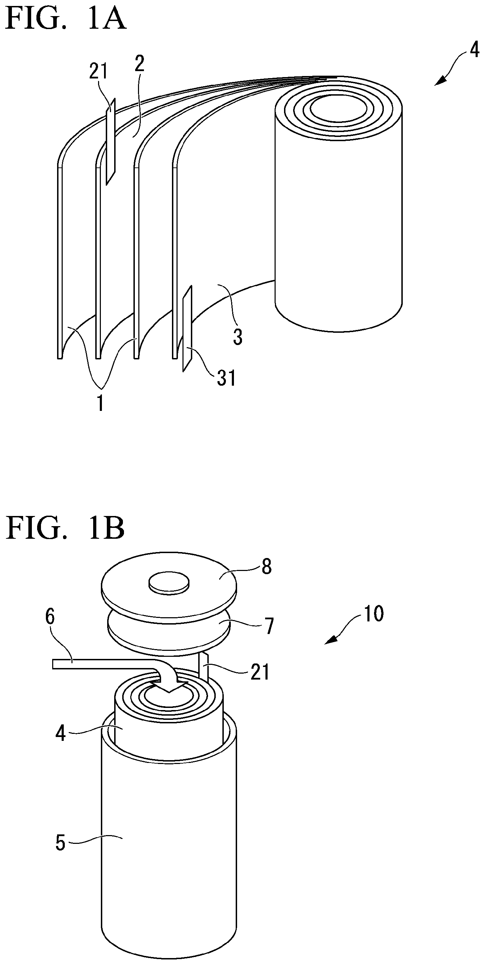

Fig. 1A is a schematic configuration view showing an example of a lithium secondary battery.
Fig. 1B is a schematic configuration view showing an example of the lithium secondary battery.

[Description of Embodiments]

In the present specification, "small variations in capacity" means that the value of a discharge capacity retention ratio measured by the following method is in a range of 90% or more and 99% or less.
First, a coin type lithium secondary battery is allowed to stand at room temperature for 10 hours to sufficiently impregnate a separator and a cathode mixture layer with an electrolytic solution.
Next, initial charging and discharging are performed by performing constant current constant voltage charging for 5 hours in which constant current charging to 4.2 V at 1 mA is performed at room temperature and constant voltage charging at 4.2 V is then performed, and thereafter performing constant current discharging in which discharging to 3.0 V at 1 mA is performed. A discharge capacity is measured, and the obtained value is defined as an "initial discharge capacity" (mAh/g).
After the initial charging and discharging, charging at 1 mA and discharging at 1 mA are repeated under the same conditions as in the initial charging and discharging.
Thereafter, the discharge capacity (mAh/g) at a thirtieth cycle is measured.
From the initial discharge capacity and the discharge capacity at the thirtieth cycle, a discharge capacity retention ratio is calculated by the following expression.

$$\text{Discharge capacity retention ratio (\%)} = \text{discharge capacity at the thirtieth cycle}$$

$$\text{(mAh/g) / initial discharge capacity (mAh/g) x 100}$$

<Method of Manufacturing Lithium Secondary Battery>

A method of manufacturing the lithium secondary battery of the present embodiment will be described.
Hereinafter, the method of manufacturing the lithium secondary battery will be described with reference to the drawings. In all the drawings below, the dimensions and ratios of each constituent element are appropriately different in order to make the drawings easier to see.
The lithium secondary battery manufactured according to the present embodiment includes an aluminum anode capable of occluding and releasing lithium ions, a cathode capable of occluding and releasing lithium ions, and an electrolyte.

As the lithium secondary battery, there is a non-aqueous electrolytic solution type secondary battery using an electrolytic solution as an electrolyte. Alternatively, as the lithium secondary battery, there is an all-solid-state battery using a solid electrolyte as an electrolyte.

The method of manufacturing the lithium secondary battery of the present embodiment includes a step of assembling the lithium secondary battery, a charging step, and a storing step. Each step will be described.

[Step of Assembling Lithium Secondary Battery]

Figs. 1A and 1B are schematic views showing an example of the lithium secondary battery manufactured according to the present embodiment. As a step of assembling the lithium secondary battery, a case of manufacturing a cylindrical lithium secondary battery 10 will be described as an example.

First, as shown in Fig. 1A, a pair of separators 1 having a strip shape, a strip-shaped cathode 2 having a cathode lead 21 at one end, and a strip-shaped aluminum anode having an anode lead 31 at one end are laminated in order of the separator 1, the cathode 2, the separator 1, and the aluminum anode 3 and are wound to form an electrode group 4.

The material of the cathode lead 21 and the anode lead 31 can be appropriately selected from nickel, copper, iron, stainless steel, or aluminum. From the viewpoint of potentials, the cathode lead 21 and the anode lead 31 are preferably made of aluminum.

Next, as shown in Fig. 1B, the electrode group 4 and an insulator (not shown) are accommodated in a battery exterior body 5, the battery bottom is then sealed, the electrode group 4 is impregnated with an electrolytic solution 6, and an electrolyte is disposed between the cathode 2 and the aluminum anode 3. Furthermore, the upper portion of the battery exterior body 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as the shape of the lithium secondary battery having the electrode group 4, a shape defined by IEC60086 which is a standard for a battery defined by the International Electrotechnical Commission (IEC), or by JIS C 8500 can be adopted. Examples thereof include shapes such as a cylindrical type and an angular type.

Furthermore, the lithium secondary battery is not limited to the wound type configuration, and may have a stacked type configuration in which a laminated structure of a cathode, a separator, a metal anode, and a separator is repeatedly stacked. A so-called coin type battery, a button type battery, and a paper type (or sheet type) battery are exemplary examples of the stacked type lithium secondary battery.

[Step of Charging Lithium Secondary Battery]

After assembling the lithium secondary battery by the above method, lithium ions are occluded in the aluminum anode of the lithium secondary battery for charging. The lithium ions are occluded in a full charge capacity based on a cathode capacity of preferably 10% or more, more preferably 50% or more, even more preferably 60% or more, and particularly preferably 70% or more.

As for the full charge capacity based on the cathode capacity, charge/discharge capacities when lithium metal is used as the anode are checked by experiments.

Specifically, the charge/discharge capacities are checked by performing constant current constant voltage charging for 5 hours in which constant current charging to 4.3 V at 1 mA is performed at room temperature and constant voltage charging at 4.3 V is then performed, and thereafter performing constant current discharging in which discharging to 3.0 V at 1.0 mA is performed.

In the step of charging the lithium secondary battery, lithium ions may be occluded in 100% of the theoretical value of the full charge capacity, but the amount of lithium ions occluded is preferably 90% or less, and more preferably 80% or less.

The upper limit and the lower limit of the amount of lithium ions occluded can be randomly combined. As an example of the combination, the amount of lithium ions occluded is 50% or more and 100% or less, 60% or more and 90% or less, and 70% or more and 80% or less of the theoretical value of the full charge capacity.

[Step of Storing Lithium Secondary Battery]

After the step of charging the lithium secondary battery, the lithium secondary battery in the charged state is stored for at least 4 hours.

The lower limit of the storage time is 6 hours or longer, 15 hours or longer, or 48 hours or longer.

The upper limit of the storage time is 500 hours or shorter, 400 hours or shorter, or 300 hours or shorter.

The upper limit and the lower limit of the storage time can be randomly combined. As an example of the combination, the storage time is 4 hours or longer and 500 hours or shorter, 6 hours or longer and 400 hours or shorter, and 48 hours or longer and 300 hours or shorter.

The storage temperature is preferably room temperature (about 23°C) from the viewpoint of reducing capital investment.

From the viewpoint of completing the storing step within a short period of time, the storage temperature is preferably set to 45°C or higher and 60°C or lower.

As the combination of the storage time and the storage temperature, there are the following combinations.

· Room temperature (about 23°C), 100 hours or longer and 300 hours or shorter.
· 45°C or higher and 60°C or lower, 6 hours or longer and 84 hours or shorter.

It is considered that an alloy layer of aluminum and lithium formed by occluding lithium ions in the aluminum anode in the charging step is stabilized by the storing step. Here, "the alloy layer of aluminum and lithium is stabilized" means that the crystal structure of the alloy of aluminum and lithium is stabilized and the formation of a new alloy layer is suppressed.

When the alloy layer of aluminum and lithium is stabilized, the discharge capacity tends to be stable. Therefore, by providing the storing step, it is possible to manufacture a lithium secondary battery having small variations in capacity. Specifically, by providing the storing step, the discharge capacity retention ratio can be set within a range of 90% or more and 99% or less.

In addition, the battery characteristics such as charge/discharge capacities and cycle characteristics can be stabilized by the storing step.

In the related art, in a case where a lithium secondary battery using graphite as an anode material is manufactured, aging is performed after assembling the lithium secondary battery.

The aging in the related art is aimed at stably generating a solid electrolyte interface (SEI) film on the electrode surface. As the aging in the related art, there are room temperature aging and high temperature aging.

On the other hand, in a case where aluminum is used as the anode material, no significant difference is observed between the shape of an initial charge curve and the shape of a charge curve after the second cycle in the results of a charge/discharge test. From the results, it is considered that the SEI film is not generated on the electrode surface in the case where aluminum is used as the anode material. Therefore, in the case where aluminum is used as the anode material, aging for generating an SEI film on the electrode surface is usually not required.

According to the examinations by the present inventors, it has been found that an alloy layer of aluminum and lithium can be stabilized by providing a predetermined storing step in a case of using an aluminum anode.

[Step of Inspecting Capacity of Lithium Secondary Battery]

After the storing step, the capacity of the lithium secondary battery is inspected.

As a step of inspecting the capacity of the lithium secondary battery, first, the value of the retention ratio of the discharge capacity at the thirtieth cycle with respect to the initial discharge capacity after storage is calculated.

· Measurement of Initial Discharge Capacity

constant current constant voltage charging in which constant current charging (occlusion of Li in the aluminum anode) to 4.2 V at 1 mA is performed at room temperature and constant voltage charging at 4.2 V is then performed is performed for 5 hours.

Thereafter, constant current discharging in which discharging (release of Li from the aluminum anode) to 3.0 V at 1 mA is performed is performed, and the initial discharge capacity is measured.

· Discharge Capacity at Thirtieth Cycle

After the initial charging and discharging, charging at 1 mA and discharging at 1 mA are repeated. This is repeated 30 times, and the discharge capacity at the thirtieth cycle is measured. The discharge capacity retention ratio is calculated by the following expression.

$$\text{Discharge capacity retention ratio (\%)} = \text{discharge capacity at the thirtieth cycle}$$

$$\text{(mAh/g) / discharge capacity at the first cycle (mAh/g) x 100}$$

In the inspecting step, a case where the value of the discharge capacity retention ratio obtained by the above method is less than 100% is determined as acceptable, and a case where the value is 100% or more is determined as unacceptable.

The case where the value of the discharge capacity retention ratio is 100% or more means that the discharge capacity increases from the initial charging and discharging to the thirtieth cycle. The reason why the case where the discharge capacity increases is determined as unacceptable is that it becomes difficult to combine cells having the same capacity in a case of assuming manufacturing of an assembled battery.

Furthermore, a case where the discharge capacity retention ratio is in a range of 90% or more and less than 100% is determined that variations in the discharge capacity are small.

The step of inspecting the capacity may be 100% inspection or sampling inspection.

Hereinafter, materials forming the lithium secondary battery manufactured by the manufacturing method of the present embodiment will be described.

«Aluminum Anode»

The aluminum anode is preferably formed of an aluminum-containing metal.

The aluminum anode is preferably any one of aluminum anodes 1 to 3 described below.

[Aluminum Anode 1]

The aluminum anode 1 is formed of an aluminum-containing metal. The aluminum-containing metal acts as an anode active material.

In the aluminum-containing metal of the aluminum anode 1, a non-aluminum metal phase is dispersed in an aluminum metal phase.

The non-aluminum metal phase means a metal phase that does not contain aluminum.

The non-aluminum metal phase is preferably formed of a non-aluminum metal compound containing one or more selected from the group consisting of Si, Ge, Sn, Ag, Sb, Bi, In, and Mg.

The non-aluminum metal phase is more preferably formed of a non-aluminum metal compound containing one or more selected from the group consisting of Si, Ge, Sn, Ag, Sb, Bi, and In.

The non-aluminum metal phase is preferably formed of non-aluminum metal compound particles.

The non-aluminum metal compound forming the non-aluminum metal phase has a very large occlusion amount of lithium. Therefore, the non-aluminum metal compound has a large volume expansion during insertion of lithium and a large volume contraction during desorption of lithium. The strain generated by the expansion and contraction develops into cracks of the non-aluminum metal compound particles, and refinement occurs in which the non-aluminum metal compound particles become smaller. The refinement of the non-aluminum metal compound particles acting as the anode active material during charging and discharging causes a shortening of the cycle life.

The aluminum anode 1 is a metal in which the non-aluminum metal phase is dispersed in the aluminum metal phase. In other words, the non-aluminum metal compound particles are coated with aluminum, which can form an alloy with lithium. When the non-aluminum metal compound particles are coated with aluminum, the non-aluminum metal compound particles are less likely to crack and are therefore less likely to be refined. Therefore, even in a case where charging and discharging of the lithium secondary battery are repeated, an initial discharge capacity is easily retained. That is, the lithium secondary battery can achieve a good discharge capacity retention ratio.

The amount of the non-aluminum metal phase in the aluminum anode 1 is preferably 0.01 mass% or more and 8 mass% or less with respect to the total amount of the aluminum metal phase and the non-aluminum metal phase. The lower limit of the amount of the non-aluminum metal phase is preferably 0.02 mass%, more preferably 0.05 mass%, and particularly preferably 0.1 mass%.

The upper limit of the amount of the non-aluminum metal phase is preferably 7 mass%, more preferably 6 mass%, and particularly preferably 5 mass%.

The upper limit and the lower limit thereof can be randomly combined. As an example of the combination, the amount of the non-aluminum metal phase is 0.02 mass% or more and 7 mass% or less, 0.05 mass% or more and 6 mass% or less, and 0.1 mass% or more and 5 mass% or less.

When the amount of the non-aluminum metal phase is equal to or more than the lower limit, a metal or metal compound other than aluminum that can contribute to the occlusion of lithium can be sufficiently secured. When the amount of the non-aluminum metal phase is equal to or less than the upper limit, the dispersed state of the non-aluminum metal phase in the aluminum metal phase tends to be good.

Furthermore, when the amount of the non-aluminum metal phase is equal to or less than the upper limit, rolling is easily performed.

The non-aluminum metal phase may contain an optional metal other than Si, Ge, Sn, Ag, Sb, Bi, In, and Mg. Examples of the optional metal include Mn, Zn, and Ni.

The aluminum anode 1 is preferably an Al-Si binary alloy, or an Al-Si-Mn ternary alloy. In the case of a ternary alloy, it is preferable that each metal is uniformly dissolved.

In a case where the non-aluminum metal phase is Si, Sr may be further contained in order to promote the refinement of the non-metal aluminum phase. As a method for adding Sr to promote the refinement of Si, the method described in Journal of Japan Institute of Light Metals Volume 37 Issue 2 (1987) pp 146-152 can be used.

In a binarized image of the aluminum anode 1 obtained under the following image acquisition conditions, the ratio of an area corresponding to the non-aluminum metal phase to the sum of an area corresponding to the aluminum metal phase and the area corresponding to the non-aluminum metal phase is preferably 10% or less.

· Image Acquisition Conditions

The aluminum anode 1 is rolled into a foil having a thickness of 0.5 mm. The foil is cut perpendicular to a rolling direction, and a cut surface is etched with a 1.0 mass% sodium hydroxide aqueous solution. The aluminum metal phase and the non-aluminum metal phase have different solubilities in sodium hydroxide. Therefore, by etching, a height difference between irregularities of a portion corresponding to the non-aluminum metal phase and a portion corresponding to the aluminum metal phase exposed on the cut surface is formed due to the difference in solubility. Specifically, the portion corresponding to the aluminum metal phase becomes a convex portion, and the portion corresponding to the non-aluminum metal phase becomes a concave portion. When the height difference between the irregularities is formed on the cut surface, a clear contrast is shown during observation with a microscope, which will be described later.

Next, a cross-sectional image of the cut surface is acquired, and the cross-sectional image is subjected to image processing to obtain a binarized image in which the convex portion corresponding to the aluminum metal phase and the concave portion corresponding to the non-aluminum metal phase are each converted into black or white. The area of the concave portion corresponds to the area of the non-aluminum metal phase. The area of the convex portion corresponds to the area of the aluminum metal phase.

The cross-sectional image can be acquired using, for example, a metallurgical microscope. In the present embodiment, a metallurgical micrograph having a magnification of 200 times or more and 500 times or less is acquired. In a case where an object having a size of 1 μm or less is observed in the observation with a microscope, for example, a scanning electron microscope (SEM) is used for the observation. In this case, an SEM image having a magnification of 10,000 times is acquired.

As the metallurgical microscope, for example, Nikon EPIPHOT 300 can be used.

The obtained SEM image or metallurgical micrograph having the above magnification is taken into a computer and subjected to binarization processing using an image analysis software. The binarization processing is a process of performing binarization using an intermediate value between the maximum brightness and the minimum brightness in the image. By the binarization processing, for example, a binarized image in which the portion corresponding to the aluminum metal phase is white and the portion corresponding to the non-aluminum metal phase is black can be obtained.

As the image analysis software, software that enables the binarization processing can be appropriately selected. Specifically, Image J, Photoshop, Image Pro Plus, or the like can be used.

In the binarized image, the area corresponding to the aluminum metal phase is referred to as S 1 and the area corresponding to the non-aluminum metal phase is referred to as S2.

The ratio $(S2 / [S 1 + S2]) \times 100$ (%) of S2 to the sum of S1 and S2 is preferably 10% or less, more preferably 6% or less, and particularly preferably 3% or less.

When the ratio of S2 is equal to or less than the upper limit, the non-aluminum metal compound is sufficiently coated with aluminum, so that the non-aluminum metal compound is even less likely to crack. Therefore, even in a case where charging and discharging of the lithium secondary battery are repeated, the initial discharge capacity is easily retained.

(Dispersed State)

In the aluminum anode 1, the non-aluminum metal phase is dispersed in the aluminum metal phase. Here, "the non-aluminum metal phase is dispersed in the aluminum metal phase" means a state in which a non-aluminum metal compound phase is present in an aluminum metal matrix.

For example, when the shape surrounded by the outer periphery of the concave portion corresponding to the non-aluminum metal compound phase observed in a case of observing the cross section of the foil-shaped aluminum anode 1 having a thickness of 0.5 mm is regarded as the cross section of one particle, the number of particles observed preferably satisfies both the following conditions (1) and (2).

Condition (1): The number density of non-aluminum metal compound particles having a particle size of 0.1 $\mu$m or more and less than 100 $\mu$m is 1000 /mm$^2$ or less.

Condition (2): The number density of non-aluminum metal compound particles having a particle size of 100 $\mu$m or more is 25 /mm$^2$ or less.

Regarding the particle size of the non-aluminum metal compound particle, for example, when a projected image of the cross-sectional shape of the non-aluminum metal compound particle from an SEM image photograph or metallurgical micrograph is sandwiched between parallel lines drawn in a certain direction, the distance (unidirectional particle diameter) between the parallel lines is measured as the particle size of the non-aluminum metal compound particle.

In addition, the "number density" means the density of the number of non-aluminum metal compound particles existing per unit area in the SEM photograph and the metallurgical micrograph.

(Manufacturing Method of Aluminum Anode 1)

The aluminum anode 1 is preferably manufactured by a manufacturing method including a step of casting an alloy and a rolling step.

· Step of Casting Alloy

In a case where casting is performed, first, a predetermined amount of the metal forming the non-aluminum metal phase is added to aluminum or high-purity aluminum to obtain a mixture 1. High-purity aluminum can be obtained by the method described later. Next, the mixture 1 is melted at 680°C or higher and 800°C or lower to obtain a molten alloy 1 of aluminum and the metal.

As the aluminum forming the aluminum phase, aluminum having a purity of 99.9 mass% or more, high-purity aluminum having a purity of 99.99 mass% or more, or the like can be used.

The metal forming the non-aluminum metal phase is one or more selected from the group consisting of Si, Ge, Sn, Ag, Sb, Bi, In, and Mg. As the metal forming the non-aluminum metal phase, for example, high-purity silicon having a purity of 99.999 mass% or more is used.

The molten alloy 1 is preferably subjected to a cleaning treatment of removing gas and non-metallic inclusions.

Examples of the cleaning treatment include the addition of a flux, a treatment of blowing an inert gas or chlorine gas, and a vacuum treatment of molten aluminum.

The vacuum treatment is performed, for example, under the condition of 700°C or higher and 800°C or lower, 1 hour or longer and 10 hours or shorter, and a degree of vacuum of 0.1 Pa or more and 100 Pa or less.

The molten alloy 1 cleaned by the vacuum treatment or the like is cast into an ingot using a mold.

As the mold, an iron mold or a graphite mold heated to 50°C or higher and 200°C or lower is used. The aluminum anode 1 can be cast by a method of pouring the molten alloy 1 at 680°C or higher and 800°C or lower into a mold. Alternatively, an ingot may also be obtained by semi-continuous casting.

· Rolling Step

The obtained alloy ingot can be directly cut and used as the aluminum anode 1. It is preferable that the ingot is rolled, extruded, forged, or the like to be formed into a plate shape. The ingot is more preferably rolled into a plate shape.

The rolling step of the ingot is, for example, a step of processing the ingot into a plate shape by performing hot rolling and cold rolling.

The hot rolling is repeatedly performed, for example, under the condition of a temperature of 350°C or higher and 550°C or lower and a working ratio per rolling pass of 2% or more and 30% or less until the aluminum ingot has a desired thickness. Here, the "working ratio" means the rate of change in thickness when rolling is performed. For example, in a case where a plate having a thickness of 1 mm is worked to have a thickness of 0.7 mm, the working ratio is 30%.

After the hot rolling, an intermediate annealing treatment may be performed before the cold rolling, as necessary. The intermediate annealing treatment is performed, for example, by heating the hot-rolled plate material to raise the temperature, and then allowing the heated plate material to cool.

In the temperature raising step in the intermediate annealing treatment, the temperature may be raised to, for example, 350°C or higher and 550°C or lower. In addition, in the temperature raising step, for example, the temperature of 350°C or higher and 550°C or lower may be held for about 1 hour or longer and 5 hours or shorter.

In the cooling step in the intermediate annealing treatment, cooling may be performed immediately after the temperature is raised. In the cooling step, it is preferable to allow the plate material to cool to about 20°C.

The cooling step may be appropriately adjusted according to a desired size of the non-aluminum metal phase. When the cooling step is performed by allowing the plate material to cool rapidly, the non-aluminum metal phase tends to become smaller. On the other hand, when the cooling step is performed at a moderate cooling rate, the crystal structure of the metal forming the non-aluminum metal phase tends to grow.

It is preferable that the cold rolling is performed at a temperature lower than the recrystallization temperature of aluminum. In addition, it is preferable that the aluminum ingot is repeatedly rolled to have a desired thickness under the condition in which the rolling reduction per rolling pass is 1% or more and 20% or less. As for the temperature of the cold rolling, the temperature of the metal to be rolled may be adjusted to 10°C to 80°C or lower.

After the cold rolling, a heat treatment may further be performed. The heat treatment after the cold rolling is usually performed in the atmosphere, but may be performed in a nitrogen atmosphere, a vacuum atmosphere, or the like. There are cases where various physical properties, specifically, hardness, conductivity, and tensile strength are adjusted by controlling the crystal structure, in addition to by softening the work-hardened plate material by the heat treatment.

Examples of the heat treatment conditions include conditions in which a heat treatment is performed at a temperature of 300°C or higher and 400°C or lower for 5 hours or longer and 10 hours or shorter.

The thickness of the aluminum anode 1 is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less.

The upper limit and the lower limit of the thickness of the aluminum anode 1 can be randomly combined. In the present embodiment, the thickness of the aluminum anode 1 is preferably 5 $\mu$m or more and 200 $\mu$m or less.

The thickness of the aluminum anode 1 may be measured using a thickness gauge or a caliper.

· Aluminum Purification Method

In a case of using high-purity aluminum as the material of the aluminum anode or the material of the alloy, examples of a refining method for purifying aluminum include a segregation method and a three-layer electrolytic method.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from the bottom portion while heating and stirring the molten aluminum at the upper portion while rotating the container. By the segregation method, high-purity aluminum having a purity of 99.99 mass% or more can be obtained.

The three-layer electrolytic method is an electrolytic method for purifying aluminum. As one form of the three-layer electrolytic method, first, aluminum or the like having a relatively low purity (for example, a grade of a purity of 99.9 mass% or less in JIS-H2102) is put into an Al-Cu alloy layer. Thereafter, in the method, with an anode in a molten state, an electrolytic bath containing, for example, aluminum fluoride and barium fluoride is disposed thereon, and high-purity aluminum is deposited on a cathode.

High-purity aluminum having a purity of 99.999 mass% or more can be obtained by the three-layer electrolytic method.

The method of purifying aluminum is not limited to the segregation method and the three-layer electrolytic method, and other known methods such as a zone melting refining method and an ultra-high vacuum melting method may be used.

[Aluminum Anode 2]

The aluminum anode 2 is an aluminum-containing metal. The aluminum anode 2 satisfies an average corrosion rate of 0.2 mm/year or less measured by an immersion test under the following immersion conditions.

(Immersion Conditions)

The aluminum-containing metal is formed into a test metal piece having a size of 40 mm in length, 40 mm in width, and 0.5 mm in thickness.

The test metal piece is immersed in a 3.5% NaCl aqueous solution adjusted to a pH of 3 using acetic acid as a pH adjuster, and the test metal piece is taken out after 72 hours. The liquid temperature of the immersion solution is set to 30°C.

The degree of corrosion is represented by the amount of corrosion loss per day for a surface area of 1 $mm^2$ of the test metal piece in mg. That is, the degree of corrosion can be calculated by the following expression. A precision balance is used for measuring the mass.

$$\text{Degree of corrosion} = (\text{mass before immersion of test metal piece (mg)} - \text{mass after immersion of test metal piece (mg)}) / (\text{surface area of test metal piece (mm}^2) \times \text{number of test days (day)})$$

From the obtained degree of corrosion, the corrosion rate is calculated by the following method.

$$\text{Corrosion rate (mm/year)} = [\text{degree of corrosion} \times 365] / \text{density of test piece (g/cm}^3)$$

The test metal piece may be washed with ethanol or the like before being immersed in the 3.5% NaCl aqueous solution adjusted to a pH of 3.
The aluminum anode 2 is preferably made of an aluminum-containing metal represented by Composition Formula (1).

$$Al_xM^1_yM^2_z ... \qquad (1)$$

(in Formula (1), $M^1$ is one or more selected from the group consisting of Mg, Ni, Mn, Zn, Cd, and Pb, $M^2$ is an unavoidable impurity, and 0 mass% $\leq y \leq 8$ mass% and $[x / (x + z)] \geq 99.9$ mass% are satisfied).

· $M^1$

In Formula (1), $M^1$ is more preferably one or more selected from the group consisting of Mg, Ni, Mn, and Zn.

• y

In Formula (1), y satisfies preferably 0.1 mass% $\leq y \leq 8.0$ mass%, preferably 0.5 mass% $\leq y \leq 7.0$ mass%, and particularly preferably 0.7 mass% $\leq y \leq 6.0$ mass%.
When the range of y is equal to or more than the above lower limit, the average corrosion rate can be controlled within the above range. In addition, when the range of y is equal to or less than the above upper limit, rolling can be performed without cracking during a rolling step at the time of casting.

· $M^2$

In Formula (1), $M^2$ is an unavoidable impurity such as a manufacturing residue that is unavoidably incorporated in a refining step of high-purity aluminum, and specifically, is a metal component other than aluminum and $M^1$. Examples of the unavoidable impurity include iron and copper.
In Formula (1), z is 0.1 mass% or less, preferably 0.05 mass% or less, and even more preferably 0.01 mass% or less.
In Formula (1), $[x / (x + z)]$ is preferably 99.95% or more, more preferably 99.99% or more, and particularly preferably 99.995% or more. The aluminum anode 2 contains highly pure aluminum in which $[x / (x + z)]$ is equal to or more than the above lower limit. A refining method for purifying aluminum will be described later.
Among the aluminum-containing metals represented by Formula (1), those having y = 0 may be described as high-purity aluminum. Among the aluminum-containing metals represented by Formula (1), those having y exceeding 0 may be described as a high-purity aluminum alloy.
As the aluminum anode 2 represented by Composition Formula (1), the high-purity aluminum or the high-purity aluminum alloy according to any one of the following (1) to (5) is preferable.

(1) High-purity aluminum-magnesium alloy 1

An alloy of 99.999% pure aluminum and magnesium. The amount of magnesium is 0.1 mass% or more and 4.0 mass% or less in the total amount of the aluminum-containing metal. The average corrosion rate is 0.04 mm/year to 0.06 mm/year.

(2) High-purity aluminum-magnesium alloy 2

An alloy of 99.9% pure aluminum and magnesium. The amount of magnesium is 0.1 mass% or more and 1.0 mass% or less in the total amount of the aluminum-containing metal. The average corrosion rate is 0.1 mm/year to 0.14 mm/year.

(3) High-purity aluminum-nickel alloy

An alloy of 99.999% pure aluminum and nickel. The amount of nickel is 0.1 mass% or more and 1.0 mass% or less in the total amount of the aluminum-containing metal. The average corrosion rate is 0.1 mm/year to 0.14 mm/year.

(4) High-purity aluminum-manganese-magnesium alloy

An alloy of 99.99% pure aluminum, manganese, and magnesium. The total amount of manganese and magnesium is 1.0 mass% or more and 2.0 mass% or less in the total amount of the aluminum-containing metal. The average corrosion rate is 0.03 mm/year to 0.05 mm/year.

(5) High-purity aluminum

99.999% pure aluminum. The average corrosion rate is 0.05 mm/year.

(Manufacturing Method of Aluminum Anode 2)

A manufacturing method of the aluminum anode 2 will be described separately for a manufacturing method 1 of the aluminum anode 2 in which the aluminum anode 2 is high-purity aluminum and a manufacturing method 2 of the aluminum anode 2 which is a high-purity aluminum alloy.
In the manufacturing method 1 and the manufacturing method 2, first, aluminum is purified. Examples of a method of purifying aluminum include the aluminum purification method described in (Manufacturing Method of Aluminum Anode 1).
Even in a case where aluminum is purified by the aluminum purification method, impurities such as manufacturing residues may be mixed. In the manufacturing method 1 and the manufacturing method 2, for example, the total amount of iron and copper contained in the aluminum is preferably 100 ppm or less, more preferably 80 ppm or less, and even more preferably 50 ppm or less.

· Manufacturing Method 1

The manufacturing method 1 preferably includes a step of casting high-purity aluminum and a rolling step.

·· Casting Step

The aluminum purified by the above-described method can be cast to obtain an aluminum ingot having a shape suitable for rolling.
In a case where casting is performed, for example, high-purity aluminum is melted at about 680°C or higher and 800°C or lower to obtain molten aluminum.
The molten aluminum is preferably subjected to a cleaning treatment of removing gas and non-metallic inclusions. Examples of the cleaning treatment include the same method as the cleaning treatment described for the aluminum anode 1.
The molten aluminum that has been cleaned is cast into an ingot using a mold.
As the mold, an iron mold or a graphite mold heated to 50°C or higher and 200°C or lower is used. The aluminum anode 2 can be cast by a method of pouring the molten aluminum at 680°C or higher and 800°C or lower into a mold. Alternatively, an ingot may also be obtained by semi-continuous casting.

·· Rolling Step

The obtained aluminum ingot can be directly cut and used as the aluminum anode 2. In the present embodiment, it is preferable that the aluminum ingot is rolled, extruded, forged, or the like to form a plate shape. In the present embodiment, the aluminum ingot is more preferably rolled.
The rolling step can be performed by the same method as the rolling step described in the manufacturing method of the aluminum anode 1.

· Manufacturing Method 2

The manufacturing method 2 preferably includes a step of casting a high-purity aluminum alloy and a rolling step.

·· Casting Step

In a case where casting is performed, first, a predetermined amount of a metal element is added to high-purity aluminum to obtain a mixture 2. Next, the mixture 2 is melted at 680°C or higher and 800°C or lower to obtain a molten alloy 2 of aluminum and the metal.
The metal element to be added is preferably one or more selected from the group consisting of Mg, Ni, Mn, Zn, Cd, and Pb. The metal containing these elements to be added preferably has a purity of 99 mass% or more.
A high-purity aluminum alloy ingot is obtained by the same method as the casting step in the manufacturing method of the aluminum anode 1 except that the molten alloy 2 is used.

·· Rolling Step

The rolling step is performed by the same method as the above-described manufacturing method 1 of the aluminum anode 2.
The thickness of the aluminum anode 2 is preferably 5 μm or more, more preferably 6 μm or more, and even more preferably 7 μm or more. In addition, the thickness is preferably 200 μm or less, more preferably 190 μm or less, and even more preferably 180 μm or less.
The upper limit and the lower limit of the thickness of the aluminum anode 2 can be randomly combined. In the present embodiment, the thickness of the aluminum anode 2 is preferably 5 μm or more and 200 μm or less.

[Aluminum Anode 3]

The aluminum anode 3 is an aluminum-containing metal.
The Vickers hardness of the aluminum anode 3 is preferably 10 HV or more and 70 HV or less, more preferably 20 HV or more and 70 HV or less, even more preferably 30 HV or more and 70 HV or less, and particularly preferably 35 HV or more and 55 HV or less.
When the aluminum anode 3 occludes lithium, there are cases where strain is generated in the crystal structure of the metal forming the aluminum anode.
It is presumed that when the Vickers hardness is equal to or less than the upper limit, strain in the crystal structure during occlusion of lithium by the aluminum anode 3 can be relaxed, and the crystal structure can be maintained. Therefore, the lithium secondary battery using the aluminum anode 3 can retain the discharge capacity even in a case where charging and discharging are repeated.
As the Vickers hardness, a value measured by the following method is used.

[Measurement Method]

As an index of the hardness of the aluminum anode 3, the Vickers hardness (HV0.05) is measured using a micro Vickers hardness tester.
The Vickers hardness is a value measured according to JIS Z 2244:2009 "Vickers hardness test - Test method". The Vickers hardness is measured by pressing a square-based pyramid diamond indenter into the surface of a test piece, which is the aluminum anode 3, releasing the test force, and then calculating the diagonal length of the indentation left on the surface.
In the above standards, the hardness symbol is set to be changed by the test force. In the present embodiment, for example, the micro Vickers hardness scale HV0.05 at a test force of 0.05 kgf (= 0.4903 N) is applied.
The aluminum anode 1 may have the properties of the aluminum anode 2.
Specifically, it is preferable that the aluminum anode 1 satisfies an average corrosion rate of 0.2 mm/year or less measured by the immersion test under the above immersion conditions.
The aluminum anode 1 may have the properties of the aluminum anode 3.
Specifically, it is preferable that the aluminum anode 1 satisfies a Vickers hardness of 10 HV or more and 70 HV or less.
The aluminum anode 1 may have the properties of the aluminum anode 2 and the aluminum anode 3.
Specifically, it is preferable that the aluminum anode 1 satisfies an average corrosion rate of 0.2 mm/year or less measured by the immersion test under the above immersion conditions and a Vickers hardness of 10 HV or more and 70 HV or less.

The aluminum anode 2 may have the properties of the aluminum anode 3.

Specifically, it is preferable that the aluminum anode 2 satisfies a Vickers hardness of 10 HV or more and 70 HV or less.

[Compositional Analysis of Aluminum Anode]

The compositional analysis of the aluminum anode can be performed using an optical emission spectrometer. Accordingly, the amount of metal elements in the aluminum-containing metal can be quantified.

As the optical emission spectrometer, for example, a model: ARL-4460, manufactured by Thermo Fisher Scientific can be used. Alternatively, the metal elements can be more accurately quantified by a glow discharge mass spectrometer.

(Anode Current Collector)

In a case where an anode current collector is used in the aluminum anode, as the material of the anode current collector, there is a strip-shaped member formed of a metal material, such as Cu, Ni, or stainless steel, as a forming material. Among these, it is preferable to use Cu as the forming material and process Cu into a thin film shape because Cu is less likely to form an alloy with lithium and can be easily processed.

As a method of causing the anode current collector to hold an anode mixture, there is a method using press-forming, or a method of forming the anode mixture into a paste using a solvent or the like, applying the paste onto the anode current collector, drying the paste, and pressing the paste to be compressed.

«Cathode»

The cathode has a cathode active material.

As the cathode active material, a lithium-containing compound or a compound containing another metal can be used. Examples of the lithium-containing compound include a lithium cobalt composite oxide having a layered structure, a lithium nickel composite oxide having a layered structure, a lithium manganese composite oxide having a spinel structure, and a lithium iron phosphate having an olivine structure.

Examples of the compound containing another metal include oxides such as titanium oxide, vanadium oxide, and manganese dioxide, and sulfides such as titanium sulfide and molybdenum sulfide.

(Conductive Material)

As the conductive material, a carbon material can be used. As the carbon material, there are graphite powder, carbon black (for example, acetylene black), a fibrous carbon material, and the like. Since carbon black is fine particles and has a large surface area, the addition of a small amount of carbon black to a cathode mixture increases the conductivity inside the cathode and thus improves charge/discharge efficiencies and output characteristics.

The ratio of the conductive material in the cathode mixture is preferably 5 parts by mass or more and 20 parts by mass or less with respect to 100 parts by mass of the cathode active material. In a case of using a fibrous carbon material such as graphitized carbon fiber or carbon nanotube as the conductive material, the ratio can be reduced.

(Binder)

As the binder, a thermoplastic resin can be used. As the thermoplastic resin, there are fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene.

These thermoplastic resins may be used as a mixture of two or more. By using a fluorine resin and a polyolefin resin as the binder and setting the ratio of the fluorine resin to the entire cathode mixture to 1 mass% or more and 10 mass% or less and the ratio of the polyolefin resin to 0.1 mass% or more and 2 mass% or less, a cathode mixture having both high adhesion to the cathode current collector and high bonding strength in the cathode mixture can be obtained.

(Cathode Current Collector)

As the cathode current collector, a strip-shaped member formed of a metal material such as Al, Ni, or stainless steel as the forming material can be used. Among these, it is preferable to use Al as the forming material and process Al into a thin film shape because Al can be easily processed and is cheap.

As a method of causing the cathode current collector to hold the cathode mixture, there is a method of press-forming the cathode mixture on the cathode current collector. In addition, the cathode mixture may be held by the cathode current collector by forming the cathode mixture into a paste using an organic solvent, applying the obtained paste of the cathode mixture to at least one side of the cathode current collector, drying the paste, and pressing the paste to be fixed.

In a case of forming the cathode mixture into a paste, as an organic solvent which can be used, there are amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone.

Examples of a method of applying the paste of the cathode mixture to the cathode current collector include a slit die coating method, a screen coating method, a curtain coating method, a knife coating method, a gravure coating method, and an electrostatic spraying method.

The cathode can be manufactured by the method mentioned above.

(Electrolyte)

The electrolyte included in the lithium secondary battery may be a liquid electrolyte or a solid electrolyte. As the liquid electrolyte, there is an electrolytic solution containing an electrolyte and an organic solvent.

· Electrolytic Solution

As an electrolyte contained in the electrolytic solution, there are lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB refers to bis(oxalato)borate), LiFSI (here, FSI refers to bis(fluorosulfonyl)imide), lower aliphatic carboxylic acid lithium salts, $LiAlCl_4$, and the like, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propionate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charging or discharging is performed at a high current rate, being less likely to deteriorate even during a long-term use, and being nondegradable even in a case where a graphite material such as natural graphite or artificial graphite is used as the anode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

The electrolytic solution may contain additives such as tris(trimethylsilyl) phosphate and tris(trimethylsilyl) borate.

· Solid Electrolyte

As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture of two or more thereof may be used. By using these solid electrolytes, the safety of the lithium secondary battery may be further enhanced.

In addition, in a case of using a solid electrolyte, there may be cases where the solid electrolyte acts as the separator, and in such a case, the separator may not be required.

(Separator)

In a case where a lithium secondary battery has a separator, as the separator, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be laminated to form the separator.

The air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate through the separator during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

<Method of Charging Lithium Secondary Battery>

The present embodiment is a method of charging a lithium secondary battery.

In the method of charging a lithium secondary battery of the present embodiment, after assembling a lithium secondary battery, the lithium secondary battery is charged to 10% or more of the full charge capacity of the lithium secondary battery, and is stored for at least 4 hours after the charging. Furthermore, the capacity of the lithium secondary battery is inspected after the storage.

In the method of charging a lithium secondary battery, description of a method of assembling the lithium secondary battery, a method of charging the lithium secondary battery, a method of storing the lithium secondary battery, and a method of inspecting the capacity of the lithium secondary battery are the same as the description of the method of manufacturing the lithium secondary battery of the present embodiment described above.

The description of the lithium secondary battery to be charged in the present embodiment is the same as the description of the lithium secondary battery manufactured by the manufacturing method of the present embodiment.

As one aspect, the present invention also includes the following aspects.

(1-1)

A method of manufacturing a lithium secondary battery including an aluminum anode configured to occlude and release lithium ions, a cathode configured to occlude and release lithium ions, and an electrolyte, the aluminum anode being formed of an aluminum-containing metal, the method including: a step of assembling the lithium secondary battery; a step of charging the assembled lithium secondary battery to 50% or more and 90% or less of a full charge capacity; a step of storing the lithium secondary battery at 40°C to 50°C for 4 hours or longer and 80 hours or shorter after the charging; and a step of inspecting a capacity of the lithium secondary battery after the step of storing.

(2-1)

A method of charging a lithium secondary battery including an aluminum anode configured to occlude and release lithium ions, a cathode configured to occlude and release lithium ions, and an electrolyte, the aluminum anode being formed of an aluminum-containing metal, the method including: charging the lithium secondary battery to 50% or more and 90% or less of a full charge capacity after assembling the lithium secondary battery; storing the lithium secondary battery at 40°C to 50°C for 4 hours or longer and 80 hours or shorter after the charging; and inspecting a capacity of the lithium secondary battery after the storing.

[Examples]

Next, the present invention will be described in more detail with reference to examples.

<Compositional Analysis of Metal Anode>

The amounts of metal elements in an aluminum-containing metal were quantified using an optical emission spectrometer (model: ARL-4460, manufactured by Thermo Fisher Scientific). The metal elements can be more accurately quantified by a glow discharge mass spectrometer.

<Observation of Metal Phase and Binarization Processing>

· Sample Production

A plate-shaped aluminum-containing metal having a thickness of 18 mm obtained by the method described later was rolled into a foil having a thickness of 0.5 mm. Thereafter, the foil was cut perpendicular to the rolling direction. The cut surface was polished with emery paper, buffed, and electropolished for 20 seconds. Thereafter, Thereafter, silicon forming the metal phase exposed on the cut surface was removed by etching with a 1.0 mass% sodium hydroxide aqueous solution.
Next, the obtained cross section was observed using a metallurgical microscope (Nikon EPIPHOT 300) at a magnification of 200 times.
Using image analysis software (Image-Pro Plus), the obtained image was binarized for simple binarization of the aluminum phase to white and the metal phase to black.

<Measurement of Average Corrosion Rate>

[Immersion Conditions]

The aluminum-containing metal obtained by the method described later was formed into a test metal piece having a size of 40 mm in length, 40 mm in width, and 0.5 mm in thickness. The surface of the test metal piece was washed with ethanol. The test metal piece was immersed in a 3.5% NaCl aqueous solution adjusted to a pH of 3 using acetic acid as a pH adjuster, and the test metal piece was taken out after 72 hours. The liquid temperature of the immersion solution was set to 30°C.
The degree of corrosion was represented by the amount of corrosion loss per day for a surface area of 1 mm$^2$ of the test metal piece in mg. That is, the degree of corrosion was calculated by the following expression. A precision balance or the like was used for measuring the mass.

$$\text{Degree of corrosion} = (\text{mass before immersion of test metal piece (mg)} - \text{mass after immersion of test metal piece (mg)}) / (\text{surface area of test metal piece} \times \text{number of test days})$$

From the obtained degree of corrosion, the corrosion rate was calculated by the following method.

$$\text{Corrosion rate (mm/year)} = [\text{degree of corrosion} \times 365] / \text{density of test piece (g/cm}^3)$$

(Vickers Hardness)

As an index of the hardness of the aluminum-containing metal obtained by the method described later, the Vickers hardness (HV0.05) was measured using a micro Vickers hardness tester.
The Vickers hardness is a value measured according to JIS Z 2244:2009 "Vickers hardness test - Test method". A micro Vickers hardness tester of Shimadzu Corporation was used for the measurement.
The Vickers hardness was measured by pressing a square-based pyramid diamond indenter into the surface of a test piece (metal foil), releasing the force (test force) pressing the indenter, and then calculating the diagonal length of the indentation left on the surface.
In the present example, the micro Vickers hardness scale HV0.05 at a test force of 0.05 kgf (= 0.4903 N) was adopted.

<Example 1>

[Production of Anode]

A silicon-aluminum alloy used in Example 1 was manufactured by the following method.

High-purity aluminum (purity: 99.99 mass% or more) and silicon (purity: 99.999 mass% or more) manufactured by Kojundo Chemical Laboratory Co., Ltd. were heated to 760°C and held, whereby a molten aluminum-silicon alloy having a silicon content of 1.0 mass% was obtained.

Next, the molten alloy was cleaned by being held at a temperature of 740°C for 2 hours under the condition of a degree of vacuum of 50 Pa.

The molten alloy was cast in a cast iron mold (22 mm × 150 mm × 200 mm) dried at 150°C to obtain an ingot.

Rolling was performed under the following conditions. After both surfaces of the ingot were subjected to scalping by 2 mm, cold rolling was performed from a thickness of 18 mm at a working ratio of 99.6%. The thickness of the obtained rolled material was 100 μm.

A high-purity aluminum-silicon alloy foil (thickness 100 μm) having an aluminum purity of 99.999% and a silicon content of 1.0 mass% was cut into a disk shape of φ14 mm to manufacture an aluminum anode 11.

As a result, the ratio of the area corresponding to the aluminum metal phase of the aluminum anode 11 was 4%.

In the aluminum anode 11, the number density of non-aluminum metal compound particles having a particle size of 0.1 μm or more and less than 100 μm was 318 /mm$^2$.

Furthermore, in the aluminum anode 11, the number density of non-aluminum metal compound particles having a particle size of 100 μm or more was 9 /mm$^2$.

Regarding the particle size of the non-aluminum metal compound particle, when a projected image of the cross-sectional shape of the non-aluminum metal compound particle from an SEM image photograph having a magnification of 10,000 times was sandwiched between parallel lines drawn in a certain direction, the distance (unidirectional particle diameter) between the parallel lines was measured as the particle size of the non-aluminum metal compound particle.

In addition, the "number density" means the density of the number of non-aluminum metal compound particles present per unit area in the SEM image photograph having a magnification of 10,000 times.

The aluminum anode 11 had a non-aluminum metal phase equivalent area ratio of 4%, an average corrosion rate of 0.067 mm/year, and a Vickers hardness of 59.6 Hv.

[Production of Cathode]

90 parts by mass of lithium cobalt oxide (product name: CELLSEED, manufactured by Nippon Chemical Industrial Co., Ltd., average particle size (D50) 10 μm) as a cathode active material, 5 parts by mass of polyvinylidene fluoride (manufactured by Kureha Corporation) as a binder, and 5 parts by mass of acetylene black (product name: DENKA BLACK, manufactured by Denka Company Limited) as a conductive material were mixed, and furthermore 70 parts by mass of N-methyl-2-pyrrolidone was mixed therein, thereby producing an electrode mixture for the cathode.

The obtained electrode mixture was applied onto an aluminum foil having a thickness of 15 μm, which was a current collector, by a doctor blade method. The applied electrode mixture was dried at 60°C for 2 hours and then vacuum-dried at 150°C for 10 hours to volatilize N-methyl-2-pyrrolidone. The amount of the cathode active material applied after the drying was 21.5 mg/cm$^2$.

The obtained laminate of the electrode mixture layer and the current collector was rolled, and cut into a disk shape of φ14 mm, thereby manufacturing a cathode, which was a laminate of a cathode mixture layer containing lithium cobalt oxide as the forming material and the current collector.

[Production of Electrolytic Solution]

In a mixed solvent prepared by mixing ethylene carbonate (EC) and diethyl carbonate (DEC) at EC:DEC = 30:70 (volume ratio), LiPF$_6$ was dissolved to 1 mol/liter to produce an electrolytic solution.

<<Manufacturing of Lithium Secondary Battery>>

[Step of Assembling Lithium Secondary Battery]

A polyethylene porous separator was disposed between the anode and the cathode and accommodated in a battery case (standard 2032), the electrolytic solution was injected, and the battery case was sealed, whereby a coin type lithium secondary battery having a diameter of 20 mm and a thickness of 3.2 mm was produced.

[Charging Step]

The separator was sufficiently impregnated with the electrolytic solution by allowing the coin type lithium secondary battery to stand at room temperature for 10 hours.
As for a full charge capacity based on a cathode capacity, charge/discharge capacities when lithium metal was used as the anode were checked by experiments.
Specifically, the charge/discharge capacities were checked by performing constant current constant voltage charging for 5 hours in which constant current charging to 4.3 V at 1.0 mA was performed at room temperature and constant voltage charging at 4.3 V was then performed, and thereafter performing constant current discharging in which discharging to 3.0 V at 1.0 mA was performed.
Thereafter, the lithium secondary battery was charged to 75% of the full charge capacity.

[Storing Step]

After the charging to 75% of the full charge capacity, the lithium secondary battery was stored at room temperature (20°C) for 10 days.

[Inspecting Step]

The value of the retention ratio of the discharge capacity at a thirtieth cycle with respect to the initial discharge capacity after the storage was calculated. In the inspecting step, a case where the value of the discharge capacity retention ratio is less than 100% was determined as acceptable, and a case where the value is 100% or more was determined as unacceptable.

· Initial Charge/Discharge

Initial charging and discharging were performed by performing constant current constant voltage charging for 5 hours in which constant current charging (occlusion of Li in Al) to 4.2 V at 1 mA was performed at room temperature and constant voltage charging at 4.2 V was then performed, and thereafter performing constant current discharging in which discharging (release of Li from Al) to 3.0 V at 1 mA was performed.

[Charge/Discharge Evaluation: Discharge Capacity at Thirtieth Cycle]

After the initial charging and discharging, charging at 1 mA and discharging at 1 mA were repeated under the same conditions as in the initial charging and discharging.
The life was evaluated by thirty cycle tests.

[Calculation of Discharge Capacity Retention Ratio]

$$\text{Discharge capacity retention ratio (\%)} = \text{discharge capacity at the thirtieth cycle}$$

$$\text{(mAh/g) / discharge capacity at the first cycle (mAh/g) x 100} \quad \text{...(Expression 1)}$$

In Example 1, the discharge capacity retention ratio calculated by (Expression 1) was 90.0%. Therefore, "acceptable" was determined.

«Example 2»

A lithium secondary battery was manufactured by the same method as in Example 1 except that the storing step was changed to 8 hours at 45°C.
In Example 2, the discharge capacity retention ratio (%) was 93.8%. Therefore, "acceptable" was determined.

«Example 3»

A lithium secondary battery was manufactured by the same method as in Example 1 except that the storing step was changed to 24 hours at 45°C.

In Example 3, the discharge capacity retention ratio (%) was 91.1%.
Therefore, "acceptable" was determined.

«Example 4»

A lithium secondary battery was manufactured by the same method as in Example 1 except that the storing step was changed to 72 hours at 45°C.

In Example 4, the discharge capacity retention ratio (%) was 98.0%.
Therefore, "acceptable" was determined.

<<Comparative Example 1>>

A lithium secondary battery was manufactured by the same method as in Example 1 except that [Charging Step] and [Storing Step] were not performed, and the discharge capacity retention ratio (%) was determined by the above-described method. The discharge capacity retention ratio (%) of Comparative Example 1 was 103%. Therefore, "unacceptable" was determined.

As described above, the lithium secondary battery manufactured according to the present embodiment showed a discharge capacity retention ratio as high as 90% or more. Furthermore, in all of Examples 1 to 4, the discharge capacity retention ratio was in a range of 90% or more and 99% or less, and variations in the discharge capacity retention ratio were small.

On the other hand, in Comparative Example 1, the discharge capacity retention ratio exceeded 100%, that is, an increase in the discharge capacity was confirmed in the cycle test up to the thirtieth cycle.

<Example 5>

[Production of Anode]

A high-purity aluminum-silicon alloy foil (thickness 50 $\mu$m) having an aluminum purity of 99.999% and a silicon content of 1.0 mass%, which was manufactured in the same manner as in Example 1, was cut out to manufacture an aluminum anode 50 having a length of 52 mm and a width of 52 mm. An anode lead was connected to the aluminum anode 50.

[Production of Cathode]

An electrode mixture prepared by the same method as in Example 1 was applied in a sheet shape, and the applied electrode mixture was dried at 60°C for 2 hours and then vacuum-dried at 150°C for 10 hours to volatilize N-methyl-2-pyrrolidone. The amount of the cathode active material applied after the drying was 21.5 mg/cm$^2$. The thickness of the sheet was 50 $\mu$m.

The obtained sheet was cut out to manufacture a cathode 50 having a length of 50 mm and a width of 50 mm. A cathode lead was connected to the cathode 50.

[Production of Electrolytic Solution]

In a mixed solvent prepared by mixing ethylene carbonate (EC) and diethyl carbonate (DEC) at EC:DEC = 30:70 (volume ratio), LiPF6 was dissolved to 1 mol/liter to produce an electrolytic solution.

[Production of Lithium Secondary Battery]

The cathode 50 and the aluminum anode 50 were disposed with a polyethylene porous separator interposed therebetween and accommodated in a laminated film exterior body. Thereafter, the above electrolytic solution was injected and the laminated film of the exterior body was sealed, whereby a film laminated type lithium secondary battery was produced.

[Charging Step]

The separator was sufficiently impregnated with the electrolytic solution by allowing the film laminated type lithium secondary battery to stand at room temperature for 10 hours.

As for a full charge capacity based on a cathode capacity, charge/discharge capacities when lithium metal was used as the anode were checked by experiments.

Specifically, the charge/discharge capacities were checked by performing constant current constant voltage charging for 5 hours in which constant current charging to 4.3 V at 16 mA was performed at room temperature and constant voltage charging at 4.3 V was then performed, and thereafter performing constant current discharging in which discharging to 3.0 V at 16 mA was performed.

Thereafter, the lithium secondary battery was charged to 10% of the full charge capacity.

[Storing Step]

After the charging to 10% of the full charge capacity, the lithium secondary battery was stored at room temperature (25°C) for 10 hours.

[Calculation of Discharge Capacity Retention Ratio]

$$\text{Discharge capacity retention ratio (\%)} = \text{discharge capacity at the thirtieth cycle}$$

$$\text{(mAh/g) / discharge capacity at the second cycle (mAh/g) x 100} \quad \dots\text{(Expression 2)}$$

In Example 5, the discharge capacity retention ratio (%) calculated by (Expression 2) was 96.0%. Therefore, "acceptable" was determined.

«Example 6»

A lithium secondary battery was manufactured by the same method as in Example 5 except that the storing step was changed to 10 hours at 45°C.

In Example 6, the discharge capacity retention ratio (%) was 94.0%. Therefore, "acceptable" was determined.

«Example 7»

A lithium secondary battery was manufactured by the same method as in Example 5 except that the storing step was changed to 10 hours at 60°C.

In Example 7, the discharge capacity retention ratio (%) was 90.0%. Therefore, "acceptable" was determined.

[Reference Signs List]

1: Separator
2: Cathode
3: Aluminum anode
4: Electrode group
5: Battery can
6: Electrolytic solution
7: Top insulator
8: Sealing body
10: Lithium secondary battery
21: Cathode lead
31: Anode lead

**Claims**

1.  A method of manufacturing a lithium secondary battery including,

    an aluminum anode configured to occlude and release lithium ions,
    a cathode configured to occlude and release lithium ions, and
    an electrolyte,
    the aluminum anode being formed of an aluminum-containing metal,
    the method comprising:

    a step of assembling the lithium secondary battery;
    a step of charging the assembled lithium secondary battery;
    a step of storing the lithium secondary battery for at least 4 hours after the charging; and
    a step of inspecting a capacity of the lithium secondary battery after the step of storing.

2.  The method of manufacturing a lithium secondary battery according to Claim 1,
    wherein the step of charging is a step of charging the lithium secondary battery to 10% or more of a full charge capacity of the assembled lithium secondary battery.

3.  The method of manufacturing a lithium secondary battery according to Claim 1 or 2,
    wherein the aluminum-containing metal is a metal in which a non-aluminum metal phase is dispersed in an aluminum metal phase.

4.  The method of manufacturing a lithium secondary battery according to any one of Claims 1 to 3,

    wherein the aluminum-containing metal has an average corrosion rate of 0.2 mm/year or less measured by an immersion test under the following immersion conditions,
    [immersion conditions]
    immersion solution: 3.5% NaCl aqueous solution adjusted to a pH of 3 using acetic acid as a pH adjuster,
    immersion temperature: 30°C,
    immersion time: 72 hours.

5.  The method of manufacturing a lithium secondary battery according to any one of Claims 1 to 4,
    wherein the aluminum-containing metal has a Vickers hardness of 10 Hv or more and 70 Hv or less.

6.  A method of charging a lithium secondary battery including,

    an aluminum anode configured to occlude and release lithium ions,
    a cathode configured to occlude and release lithium ions, and
    an electrolyte,
    the aluminum anode being formed of an aluminum-containing metal,
    the method comprising:

    charging the lithium secondary battery after assembling the lithium secondary battery;
    storing the lithium secondary battery for at least 4 hours after the charging; and
    inspecting a capacity of the lithium secondary battery after the storing.

FIG. 1A

FIG. 1B

## INTERNATIONAL SEARCH REPORT

| | International application No. |
|---|---|
| | PCT/JP2021/014757 |

A. CLASSIFICATION OF SUBJECT MATTER
H01M 10/058(2010.01)i; H01M 4/38(2006.01)i; H01M 4/46(2006.01)i; H01M
10/052(2010.01)i
FI: H01M10/058; H01M4/38 Z; H01M10/052; H01M4/46
According to International Patent Classification (IPC) or to both national classification and IPC

B. FIELDS SEARCHED

Minimum documentation searched (classification system followed by classification symbols)
H01M10/058; H01M4/38; H01M4/46; H01M10/052

Documentation searched other than minimum documentation to the extent that such documents are included in the fields searched
Published examined utility model applications of Japan          1922–1996
Published unexamined utility model applications of Japan      1971–2021
Registered utility model specifications of Japan                     1996–2021
Published registered utility model applications of Japan        1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-195028 A (HITACHI MAXELL, LTD.) 26 October 2017 (2017-10-26) claims, paragraphs [0012]–[0035], [0041], [0055]-[0057], [0070]-[0117] | 1-2, 4-6<br>3-5 |
| Y | JP 9-320634 A (MATSUSHITA ELECTRIC INDUSTRIAL CO., LTD.) 12 December 1997 (1997-12-12) claims, paragraphs [0008]-[0036] | 3-5 |
| A | WO 2017/138361 A1 (HITACHI MAXELL, LTD.) 17 August 2017 (2017-08-17) | 1-6 |
| A | JP 2014-149988 A (TOYOTA MOTOR CORP.) 21 August 2014 (2014-08-21) | 1-6 |
| A | JP 63-318070 A (NIPPONDENSO CO., LTD.) 26 December 1988 (1988-12-26) | 1-6 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 June 2021 (15.06.2021) | 22 June 2021 (22.06.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

23

**INTERNATIONAL SEARCH REPORT**

International application No.

PCT/JP2021/014757

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2019-129059 A (SUMITOMO CHEMICAL CO., LTD.) 01 August 2019 (2019-08-01) | 1-6 |

Form PCT/ISA/210 (continuation of second sheet) (January 2015)

**INTERNATIONAL SEARCH REPORT**
Information on patent family members

International application No.

PCT/JP2021/014757

| Patent Documents referred in the Report | Publication Date | Patent Family | Publication Date |
|---|---|---|---|
| JP 2017-195028 A | 26 Oct. 2017 | (Family: none) | |
| JP 9-320634 A | 12 Dec. 1997 | (Family: none) | |
| WO 2017/138361 A1 | 17 Aug. 2017 | CN 108604706 A KR 10-2018-0108584 A | |
| JP 2014-149988 A | 21 Aug. 2014 | (Family: none) | |
| JP 63-318070 A | 26 Dec. 1988 | (Family: none) | |
| JP 2019-129059 A | 01 Aug. 2019 | JP 6442630 B1 WO 2019/146231 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020070384 A

- JP 2011228058 A

**Non-patent literature cited in the description**

- *Journal of Japan Institute of Light Metals,* 1987, vol. 37 (2), 146-152